# FASCICULE DE BREVET EUROPEEN

(11) **EP 2 491 532 B1**
(45) Date de publication et mention de la délivrance du brevet: **22.06.2022**
(21) Numéro de dépôt: 10785101.6
(22) Date de dépôt: 12.10.2010
(51) Int. Cl.: G06T 7/00, G06T 7/20, G06K 9/64

(54) **PROCEDE, PROGRAMME D'ORDINATEUR ET DISPOSITIF DE SUIVI HYBRIDE DE REPRESENTATIONS D'OBJETS, EN TEMPS REEL, DANS UNE SEQUENCE D'IMAGES**
VERFAHREN, COMPUTERPROGRAMM, UND VORRICHTUNG FÜR ECHTZEIT-HYBRIDVERFOLGUNG VON OBJEKTDARSTELLUNGEN IN EINER BILDFOLGE
METHOD, COMPUTER PROGRAM AND DEVICE FOR REAL-TIME HYBRID TRACKING OF OBJECT REPRESENTATIONS IN AN IMAGE SEQUENCE

(30) Priorité: 20.10.2009 FR 0957353
(43) Date de publication de la demande: 29.08.2012
(73) Titulaire: QUALCOMM Incorporated, San Diego, CA 92121-1714 (US)
(72) Inventeur: LIVET, Nicolas, 38120 Saint Egreve (FR); PASQUIER, Thomas, 33500 Libourne (FR); CHAMOUX, Jérémy, 74370 Naves Parmelan (FR)
(74) Mandataire: Bardehle Pagenberg Partnerschaft mbB Patentanwälte Rechtsanwälte
(86) Numéro de dépôt international: PCT/FR2010/052154
(87) Numéro de publication internationale: WO 2011/048302

(56) Documents cités:
- EP-A2- 1 594 322
- US-B1- 6 173 066
- YOUNGMIN PARK ET AL: "Multiple 3D Object tracking for augmented reality", MIXED AND AUGMENTED REALITY, 2008. ISMAR 2008. 7TH IEEE/ACM INTERNATIONAL SYMPOSIUM ON, IEEE, PISCATAWAY, NJ, USA, 15 septembre 2008 (2008-09-15), pages 117-120, XP031343985, ISBN: 978-1-4244-2840-3
- VACCHETTI L ET AL: "Fusing online and offline information for stable 3D tracking in real-time", PROCEEDINGS / 2003 IEEE COMPUTER SOCIETY CONFERENCE ON COMPUTER VISION AND PATTERN RECOGNITION, 18 - 20 JUNE 2003, MADISON, WISCONSIN; [PROCEEDINGS OF THE IEEE COMPUTER CONFERENCE ON COMPUTER VISION AND PATTERN RECOGNITION], LOS ALAMITOS, CALIF. [U.A, vol. 2, 18 juin 2003 (2003-06-18), pages 241-248, XP010644679, ISBN: 978-0-7695-1900-5
- DUY-NGUYEN TA ET AL: "SURFTrac: Efficient tracking and continuous object recognition using local feature descriptors", COMPUTER VISION AND PATTERN RECOGNITION, 2009. CVPR 2009. IEEE CONFERENCE ON, IEEE, PISCATAWAY, NJ, USA, 20 juin 2009 (2009-06-20), pages 2937-2944, XP031514466, ISBN: 978-1-4244-3992-8
- JIANG GAO: "Hybrid Tracking and Visual Search", PROCEEDINGS OF THE 16TH ACM INTERNATIONAL CONFERENCE ON MULTIMEDIA, 26 octobre 2008 (2008-10-26), - 31 octobre 2008 (2008-10-31), pages 909-912, XP002582144,
- WAGNER D ET AL: "Pose tracking from natural features on mobile phones", MIXED AND AUGMENTED REALITY, 2008. ISMAR 2008. 7TH IEEE/ACM INTERNATIONAL SYMPOSIUM ON, IEEE, PISCATAWAY, NJ, USA, 15 septembre 2008 (2008-09-15), pages 125-134, XP031343987, ISBN: 978-1-4244-2840-3
- MURPHY-CHUTORIAN E ET AL: "Head Pose Estimation in Computer Vision: A Survey", IEEE TRANSACTIONS ON PATTERN ANALYSIS AND MACHINE INTELLIGENCE, IEEE SERVICE CENTER, LOS ALAMITOS, CA, US, vol. 30, no. 4, 1 avril 2009 (2009-04-01), pages 607-626, XP011246884, ISSN: 0162-8828
- HINTERSTOISSER S ET AL: "Online learning of patch perspective rectification for efficient object detection", COMPUTER VISION AND PATTERN RECOGNITION, 2008. CVPR 2008. IEEE CONFERENCE ON, IEEE, PISCATAWAY, NJ, USA, 23 juin 2008 (2008-06-23), pages 1-8, XP031297072, ISBN: 978-1-4244-2242-5
- MUSTAFA OZUYSAL ET AL: "Fast Keypoint Recognition in Ten Lines of Code", CVPR '07. IEEE CONFERENCE ON COMPUTER VISION AND PATTERN RECOGNITION; 18-23 JUNE 2007; MINNEAPOLIS, MN, USA, IEEE, PISCATAWAY, NJ, USA, 1 June 2007 (2007-06-01), pages 1-8, XP031114380, ISBN: 978-1-4244-1179-5
- VACCHETTI L ET AL: "STABLE REAL-TIME 3D TRACKING USING ONLINE AND OFFLINE INFORMATION", IEEE TRANSACTIONS ON PATTERN ANALYSIS AND MACHINE INTELLIGENCE, IEEE COMPUTER SOCIETY, USA, vol. 26, no. 10, 1 October 2004 (2004-10-01), pages 1385-1391, XP001211359, ISSN: 0162-8828, DOI: 10.1109/TPAMI.2004.92
- Jonathan Mooser ET AL: "Fast Simultaneous Tracking and Recognition Using Incremental Keypoint Matching", Fourth International Symposium on 3D Data Processing, Visualization and Transmission, 18 June 2008 (2008-06-18), XP055121864, Retrieved from the Internet: URL:http://www.cc.gatech.edu/conferences/3 DPVT08/Program/Papers/paper161.pdf [retrieved on 2014-06-05]
- Tomás Svoboda: "Kanade-Lucas-Tomasi Tracking (KLT tracker)", , 26 November 2007 (2007-11-26), pages 1-8, XP055717403, Retrieved from the Internet: URL:http://cmp.felk.cvut.cz/cmp/courses/XE 33PVR/WS20072008/Lectures/Motion/klt-print .pdf [retrieved on 2020-07-22]
- ZHENG JINXIN ET AL: "Automatic image parameter optimization Based on Levenberg-Marquardt algorithm", INDUSTRIAL ELECTRONICS, 2009. ISIE 2009. IEEE INTERNATIONAL SYMPOSIUM ON, IEEE, PISCATAWAY, NJ, USA, 5 July 2009 (2009-07-05), pages 724-728, XP031518871, DOI: 10.1109/ISIE.2009.5218072 ISBN: 978-1-4244-4347-5

## Description

La présente invention concerne l'analyse d'images et plus particulièrement un procédé, un programme d'ordinateur et un dispositif de suivi hybride de représentations d'objets, en temps réel, dans une séquence d'images, notamment pour des applications de réalité augmentée.

La réalité augmentée a pour objet d'insérer un ou plusieurs objets virtuels dans des images d'un flux vidéo. Selon le type d'application, la position et l'orientation de ces objets virtuels peuvent être déterminées par des données externes de la scène représentée par les images, par exemple des coordonnées issues directement d'un scénario de jeu, ou par des données liées à certains éléments de cette scène, par exemple des coordonnées d'un point particulier de la scène tel que la main d'un joueur ou un élément du décor. Lorsque la position et l'orientation sont déterminées par des données liées à certains éléments de cette scène, il peut être nécessaire de suivre ces éléments en fonction des mouvements de la caméra ou des mouvements de ces éléments eux-mêmes dans la scène.

Les algorithmes de reconnaissance d'objets (aussi appelés *object recognition* ou *object indexation* en terminologie anglo-saxonne) permettent d'identifier la présence de la représentation de certains objets dans une image ou une séquence d'images issues d'un capteur d'images tel qu'une caméra. En outre, ces algorithmes sont souvent en mesure de déterminer la position approximative de l'objet reconnu en fonction de la position de référence de la caméra.

A titre d'illustration, l'école Polytechnique Fédérale de Lausanne a développé un tel algorithme. Durant une phase d'initialisation, des éléments caractéristiques de différentes représentations d'objets, appelés descripteurs, par exemple des ensembles comprenant des points d'intérêt et leur entourage formant une portion d'image, sont mémorisés et organisés selon des structures de classification tels que des arbres de décision binaires ou selon des structures à ramifications multiples, aussi appelées structures de décision de type FERNS. Ces structures permettent, durant une phase de reconnaissance, une classification simple et rapide d'objets représentés dans des images par comparaison d'intensité de pixels (acronyme de *Picture Element* en terminologie anglo-saxonne) de portions d'image extraites autour de points d'intérêt préalablement détectés dans l'image.

Les points d'intérêt, représentant des emplacements avec de fortes valeurs de gradients directionnels dans l'image, sont, par exemple, de type Harris, FAST, SURF (acronyme de Speeded-Up *Robust Features* en terminologie anglo-saxonne), SIFT (acronyme de *Scale-Invariant Feature Transform* en terminologie anglo-saxonne), MSER (sigle de *Maximally Stable Extremal Region* en terminologie anglo-saxonne) ou YAPE (acronyme de *Yet Another Point Extractor* en terminologie anglo-saxonne).

L'appariement effectué entre les portions d'images extraites, selon les points d'intérêt identifiés, de l'image analysée et de l'image utilisée lors de l'initialisation, basé sur la structure de décision précédemment créée, permet d'identifier des correspondances avec des objets présents dans la base de données. Ces correspondances permettent de décider l'identité d'un ou plusieurs objets représentés dans l'image analysée et d'en extraire une pose approximative.

Les algorithmes de suivi permettent quant à eux de retrouver de façon très précise, dans une scène réelle, la pose, c'est-à-dire la position et l'orientation, d'un objet dont l'information de géométrie est généralement disponible ou, de manière équivalente, de retrouver les paramètres extrinsèques de position et d'orientation d'une caméra filmant cet objet, grâce par exemple, à l'analyse d'image.

A titre d'illustration, il existe un algorithme de suivi visuel basé sur l'appariement de points d'intérêt de l'image courante d'un flux vidéo avec ceux d'une image clé, appelée *keyframe* en terminologie anglo-saxonne, obtenue à l'initialisation du système, ou ceux d'une image clé mise à jour durant l'exécution du suivi visuel. Ces images clés caractérisent les objets enregistrés dans le système. L'algorithme permet alors de retrouver, dans une scène réelle, la pose d'un objet dont le maillage tridimensionnel (3D) est disponible sous forme de modèle 3D, ou de retrouver, de manière équivalente, les paramètres extrinsèques de position et d'orientation d'une caméra filmant cet objet.

L'image courante est d'abord traitée avec un opérateur visant à détecter des points d'intérêt. Des portions d'image extraites autour de ces points d'intérêt sont alors comparées avec des portions d'image extraites autour de points d'intérêt préalablement détectés dans une ou plusieurs images clés enregistrées afin de retrouver un nombre important de correspondances, ou d'appariements, entre ces paires d'images pour estimer la pose de l'objet. A cette fin, une image clé est ici composée de trois éléments : une image capturée du flux vidéo, une pose (orientation et position) de l'objet réel apparaissant dans cette image et les paramètres intrinsèques caractérisant la caméra utilisée pour la capture de cette image. Les images clés sont des images extraites du flux vidéo dans lesquelles l'objet à suivre a été placé manuellement grâce à l'utilisation d'un dispositif de pointage tel qu'une souris. Les images clés caractérisent de préférence la pose d'un même objet dans plusieurs images. Elles sont créées et enregistrées « hors ligne », c'est-à-dire hors du régime permanent de l'application de suivi. Il est intéressant de noter que pour des cibles ou objets de type planaire, par exemple un magazine, ces images clés peuvent être directement générées à partir d'une image disponible de l'objet, par exemple au format JPEG ou bitmap.

Lors de l'initialisation de l'application de suivi, les images clés hors ligne sont traitées afin de positionner des points d'intérêt en fonction des paramètres choisis lors du lancement de l'application. Ces paramètres sont spécifiés de façon empirique pour chaque type d'utilisation de l'application et permettent d'adapter l'application de détection et d'appariement pour obtenir une meilleure qualité d'estimation de la pose de l'objet selon les caractéristiques de l'environnement réel. Ensuite, lorsqu'une représentation de l'objet réel dans l'image courante est dans une pose qui est proche de la pose d'une représentation de ce même objet dans une des images clé hors lignes, le nombre d'appariements devient important. Il est alors possible de retrouver la transformation affine permettant de caler le modèle tridimensionnel de l'objet sur l'objet réel.

Lorsqu'une telle correspondance a été établie, l'algorithme de suivi passe en régime permanent. Les déplacements de l'objet sont suivis d'une image sur l'autre et les dérives éventuelles sont compensées grâce aux informations contenues dans l'image clé hors ligne sélectionnée lors de l'initialisation. Il convient de noter que pour des besoins de précision, cette image clé hors ligne peut être reprojetée en utilisant la pose estimée de l'image précédente. Cette reprojection permet ainsi d'avoir une image clé qui contient une représentation de l'objet similaire à celle de l'image courante et peut ainsi permettre à l'algorithme de fonctionner avec des points d'intérêt et des descripteurs non robustes aux rotations.

D'une façon générale, un point p de l'image est la projection d'un point P de la scène réelle avec *p* ~ *P_{I} · P_{E}* · *T_{p→c}* · *P* où *Pₗ* est la matrice des paramètres intrinsèques de la caméra, c'est-à-dire sa focale, le centre de l'image et le décalage, *P_{E}* est la matrice des paramètres extrinsèques de la caméra, c'est-à-dire la position de la caméra dans l'espace réel, et *T_{p→c}* est la matrice de passage entre le repère associé à l'objet suivi vers le repère attaché à la caméra. Seule la position relative de l'objet par rapport à la position relative de la caméra est ici considérée, ce qui revient à placer le repère de la scène réelle au niveau du centre optique de la caméra. Il en résulte la relation *p* ~ *P_{I}* · *T_{p→c}* · *P.* La matrice *Pₗ* étant connue, le problème de suivi consiste donc à déterminer la matrice *T_{p→c}*, c'est à dire la position et l'orientation de l'objet par rapport au repère de la caméra.

Pour ce faire, un algorithme dit de « minimisation d'erreur » est employé afin de trouver la meilleure solution pour l'estimation de *T_{p→c}* en utilisant l'ensemble des correspondances tridimensionnelles sur le modèle géométrique et bidimensionnelles (2D) dans l'image courante et dans l'image clé. A titre d'exemple, un algorithme de type RANSAC (acronyme de *RANdom SAmple Consensus* en terminologie anglo-saxonne) ou PROSAC (acronyme de *PROgressive SAmple Consensus* en terminologie anglo-saxonne), permettant de supprimer les erreurs de mesures (correspondances 2D/3D erronées) peut être combiné avec un algorithme de type Levenberg-Marquardt pour converger rapidement vers une solution optimale qui réduit l'erreur de reprojection.

Cependant, lorsque la mesure d'erreur devient trop importante, c'est-à-dire lorsque le nombre d'appariements entre l'image courante et l'image clé courante devient trop faible, le suivi subit un décrochage (il est considéré que l'estimation de la pose de l'objet n'est plus suffisamment cohérente) et une nouvelle phase d'initialisation est nécessaire.

Il existe également un algorithme de suivi d'objets appelé « *KLT feature Tracker* », permettant de suivre des points caractéristiques dans une séquence d'images et d'estimer un flot optique temporel (appelé *optical flow* en terminologie anglo-saxonne), c'est-à-dire les déplacements de pixels entre deux images consécutives. Cette méthode vise ainsi à trouver un pixel *v* dans une image J qui semble le plus similaire à un pixel *u* d'une image / en estimant le déplacement d de ce pixel entre les deux images. En d'autres termes, les coordonnées du pixel *v* peuvent s'exprimer de la façon suivante : *v = u* + *d = [ux + dx, uy* + *dy].*

Une implémentation de la recherche et du suivi de ces descripteurs est proposée dans la librairie publique connue sous le nom d'OpenCV (acronyme *d'Open Computer Vision* en terminologie anglo-saxonne), développée par la société Intel. Cette implémentation propose notamment l'utilisation d'une pyramide d'images sous-échantillonnées et lissée afin d'accroître la robustesse de la solution aux mouvements rapides des objets suivis dans l'image ou aux mouvements rapide de la caméra.

Plus précisément, la solution consiste ici à retrouver la position d'une portion d'image *p₁* de l'image *l* en cherchant la portion d'image *p₂* de l'image *J* qui en est la plus similaire. Lorsqu'un premier résultat satisfaisant est trouvé pour cette résolution, une itération est effectuée sur la structure pyramidale où une nouvelle estimation du déplacement est effectuée. Le processus se répète jusqu'à la résolution de l'image initiale (par exemple celle acquise par le capteur d'images).

Cependant, l'utilisation de ces algorithmes de reconnaissance et de suivi est particulièrement coûteuse en terme de calculs et fait chuter les performances de systèmes ne possédant pas des processeurs puissants comme par exemple des plateformes légères telles que des téléphones mobiles. De plus, ces algorithmes ne sont généralement pas suffisamment robustes au bruit, au mouvement rapide et au changement de luminosité. Ils ne sont donc pas adaptés à être mis en œuvre dans un dispositif tel qu'un téléphone mobile possédant un processeur de faible puissance et un capteur d'image de qualité médiocre.

Un procédé de suivi d'un objet dans une séquence d'images est par ailleurs connu du document « Fast simultaneous tracking and récognition using incremental keypoint matching» par J. Mooser, Q. Wang, S.You,et U. Neumann, publié à la conférence « 4th Int. Symposium on 3D Processing, Visualization and Transmission », Georgia Institute of Technology à Atlanta, Géorgie (Etats-Unis) le 18 juin 2008. Ce procédé présente une approche unifiée de la reconnaissance d'objets et du suivi d'objets, combinant l'appariement de caractéristiques locales avec le flux optique. Comme beaucoup d'algorithmes traditionnels, cet algorithme implémente la reconnaissance en faisant correspondre les patchs d'images détectés à une base de données d'objets connus. Cet algorithme, cependant, aligne les points clés de manière incrémentielle, ce qui signifie qu'il ne teste que quelques points clés à chaque image jusqu'à ce que l'objet complet soit identifié. La reconnaissance et le suivi se déroulent ainsi en temps réel, même avec des caractéristiques dimensionnelles et une base de données arbitrairement grande. L'invention permet de résoudre au moins un des problèmes exposés précédemment.

L'invention a ainsi pour objet un procédé pour ordinateur de suivi hybride d'une représentation d'au moins un objet dans une séquence d'images à l'aide d'au moins une image clé, ce procédé comprenant les étapes suivantes,
- acquisition d'une première et d'une seconde image de ladite séquence d'images, chacune comprenant une représentation dudit au moins un objet ;
- identification d'au moins une première portion d'image de ladite première image, ladite au moins une première portion d'image de ladite première image comprenant au moins une partie d'une représentation dudit au moins un objet ;
- extraction d'au moins une seconde portion d'image de ladite au moins une image clé, ladite au moins une seconde portion d'image de ladite au moins une image clé comprenant au moins une partie d'une représentation dudit au moins un objet ;
- estimation d'au moins une première pose relative dudit au moins un objet dans au moins une première portion d'image de ladite seconde image, similaire à ladite au moins une première portion d'image de ladite première image, selon ladite au moins une première portion d'image de ladite première image,
   ladite étape d'estimation de ladite au moins une première pose relative dudit au moins un objet dans ladite au moins une première portion d'image de ladite seconde image comprenant une étape de recherche, dans ladite seconde image, de ladite au moins une première portion d'image de ladite seconde image, similaire à ladite au moins une première portion d'image de ladite première image ;
- recherche d'au moins une seconde portion d'image de ladite seconde image, similaire à ladite au moins une seconde portion d'image de ladite image clé ;
   ladite étape de recherche d'au moins une seconde portion d'image de ladite seconde image comprenant une étape de reprojection de ladite au moins une seconde portion d'image de ladite image clé selon une pose estimée dudit au moins un objet à partir de la première image, et
- estimation de la pose relative dudit au moins un objet selon ladite au moins une première pose relative et au moins une seconde pose relative dudit au moins un objet dans ladite au moins une seconde portion d'image de ladite seconde image, similaire à ladite au moins une seconde portion d'image de ladite image clé ;
- ladite au moins une seconde portion de ladite image clé étant extraite de ladite au moins une image clé selon au moins un point d'intérêt de ladite image clé préalablement déterminé ;
- la procédé comprenant en outre une étape de sélection dudit au moins un point d'intérêt ;
- ladite étape de sélection dudit au moins un point d'intérêt comprenant une sélection des points d'intérêt en fonction de la taille de l'objet suivi dans ladite seconde image ou une sélection des points d'intérêt selon une grille combinée avec l'image clé.

Le procédé selon l'invention permet ainsi de suivre la représentation d'un objet dans une séquence d'images selon une image clé et une image précédente sans nécessiter de ressources de calcul importantes. Le procédé peut ainsi être mis en œuvre sur une plateforme légère telle qu'un téléphone mobile.

Selon un mode de réalisation particulier, ladite étape d'identification de ladite au moins une première portion d'image de ladite première image comprend une étape d'extraction de ladite au moins une première portion d'image de ladite première image.

Le procédé selon l'invention permet donc aussi de suivre la représentation d'un objet dans une séquence d'images selon une image clé et une image précédente par analyse d'images. Le procédé permet également d'utiliser des points singuliers permettant d'optimiser la qualité de suivi de l'objet. Enfin, le procédé, via l'étape de sélection, permet de choisir des points d'intérêt pertinents en termes de quantité de calcul nécessaire.

De façon avantageuse, ladite étape de recherche de ladite au moins une première portion d'image de ladite seconde image similaire à ladite au moins une première portion d'image de ladite première image met en œuvre un algorithme de recherche de type KLT. La recherche de similarité de portions d'image ne requiert ainsi pas d'étape coûteuse de reprojection.

Avantageusement, le procédé comprend en outre une étape de validation dudit au moins un point d'intérêt sélectionné afin de choisir des points d'intérêt pertinents en termes de qualité de résultat.

Selon un mode de réalisation particulier, ladite étape de recherche d'au moins une seconde portion d'image de ladite première ou seconde image, similaire à ladite au moins une seconde portion d'image de ladite image clé, met en œuvre un algorithme de type KLT qui permet d'obtenir efficacement des résultats de bonne qualité.

Toujours selon un mode de réalisation particulier, le procédé comprend en outre une étape de détermination d'au moins un point d'intérêt dans ladite au moins une seconde image.

Toujours selon un mode de réalisation particulier, ladite étape de recherche de ladite au moins une première portion d'image de ladite seconde image, similaire à ladite au moins une première portion d'image de ladite première image met en œuvre au moins deux algorithmes différents de recherche de portion d'image par similarité. Un tel mode de réalisation permet de rendre le procédé de suivi plus robuste.

Toujours selon un mode de réalisation particulier, ladite étape d'estimation d'une pose relative d'au moins une première portion d'image de ladite seconde image et/ou ladite étape de recherche d'au moins une seconde portion d'image de ladite première ou seconde image comprennent une étape de prédiction de pose utilisant au moins un résultat d'estimation de la pose relative dudit au moins un objet effectuée sur des images précédentes. Le procédé selon l'invention permet ainsi de combiner l'analyse d'image et le calcul prédictif pour optimiser les résultats en termes de qualité et de quantité de calcul nécessaire.

L'invention a également pour objet un programme d'ordinateur comprenant des instructions adaptées à la mise en œuvre de chacune des étapes du procédé décrit précédemment lorsque ledit programme est exécuté sur un ordinateur.

L'invention a aussi pour objet un dispositif comprenant des moyens adaptés à la mise en œuvre de chacune des étapes du procédé décrit précédemment.

Les avantages procurés par ce programme d'ordinateur et ce dispositif sont similaires à ceux évoqués précédemment.

D'autres avantages, buts et caractéristiques de la présente invention ressortent de la description détaillée qui suit, faite à titre d'exemple non limitatif, au regard des dessins annexés dans lesquels :
- la figure 1 illustre certaines étapes d'un exemple d'algorithme hybride de suivi de représentation d'objets dans une séquence d'images selon l'invention ;
- la figure 2 illustre un exemple de mise en œuvre de la phase d'initialisation de l'algorithme hybride de suivi de représentation d'objets dans une séquence d'images représenté sur la figure 1 ;
- la figure 3, comprenant les figure 3a et 3b, illustre un premier mode de mise en œuvre de la phase d'utilisation de l'algorithme hybride de suivi de représentation d'objets dans une séquence d'images représenté sur la figure 1 ;
- la figure 4 illustre schématiquement un second mode de mise en œuvre de la phase d'utilisation de l'algorithme hybride de suivi de représentation d'objets dans une séquence d'images représenté sur la figure 1 ;
- la figure 5 illustre un exemple d'algorithme de type KLT mis en œuvre dans le mode de réalisation illustré en référence à la figure 4 pour estimer la transformation affine entre des éléments d'une image précédente et d'une image courante ;
- la figure 6 illustre schématiquement un troisième mode de mise en œuvre de la phase d'utilisation de l'algorithme hybride de suivi de représentation d'objets dans une séquence d'images représenté sur la figure 1 ;
- la figure 7 illustre schématiquement certaines étapes d'un exemple d'algorithme de suivi d'objets selon un quatrième mode de réalisation pour la mise en œuvre de la phase d'utilisation de l'algorithme hybride de suivi de représentation d'objets dans une séquence d'images représenté sur la figure 1 ;
- la figure 8 illustre schématiquement la mise en œuvre de l'algorithme de suivi représenté sur la figure 7 ;
- la figure 9 illustre schématiquement certaines étapes d'une variante de l'exemple d'algorithme de suivi d'objets selon le quatrième mode de réalisation pour la mise en œuvre de la phase d'utilisation de l'algorithme hybride de suivi de représentation d'objets dans une séquence d'images représenté sur la figure 1 ; et,
- la figure 10 illustre un exemple d'architecture matérielle adaptée à mettre en œuvre l'invention.

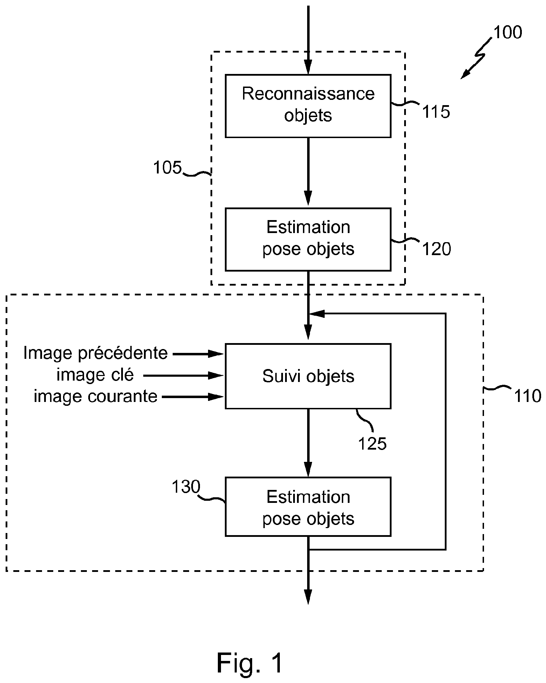

La figure 1 illustre certaines étapes d'un exemple d'algorithme hybride 100 de suivi de représentation d'objets dans une séquence d'images selon l'invention. Il comprend une phase d'initialisation 105 et une phase d'utilisation 110.

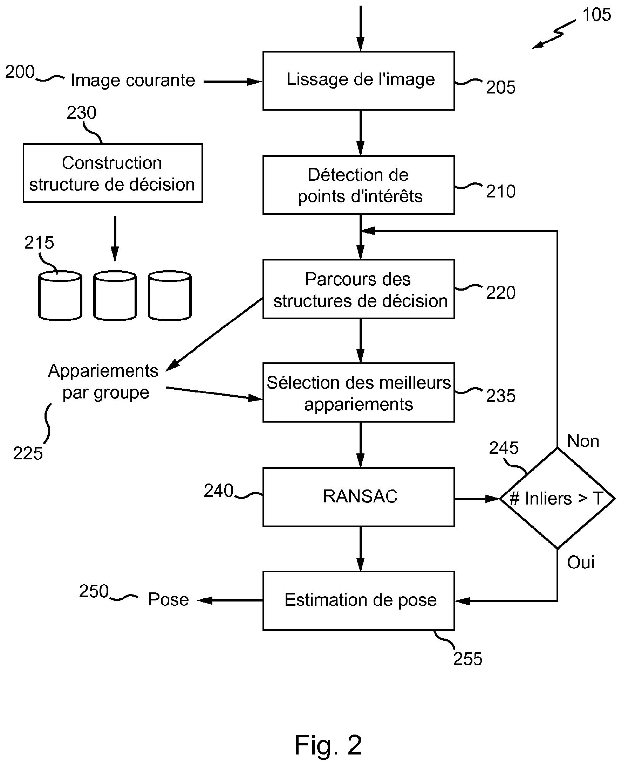

La phase d'initialisation 105 a notamment pour objet de reconnaître une ou plusieurs représentations d'objets dans une image (étape 115) et d'évaluer la pose de ces objets (étape 120). La phase d'initialisation est décrite plus en détail en référence à la figure 2.

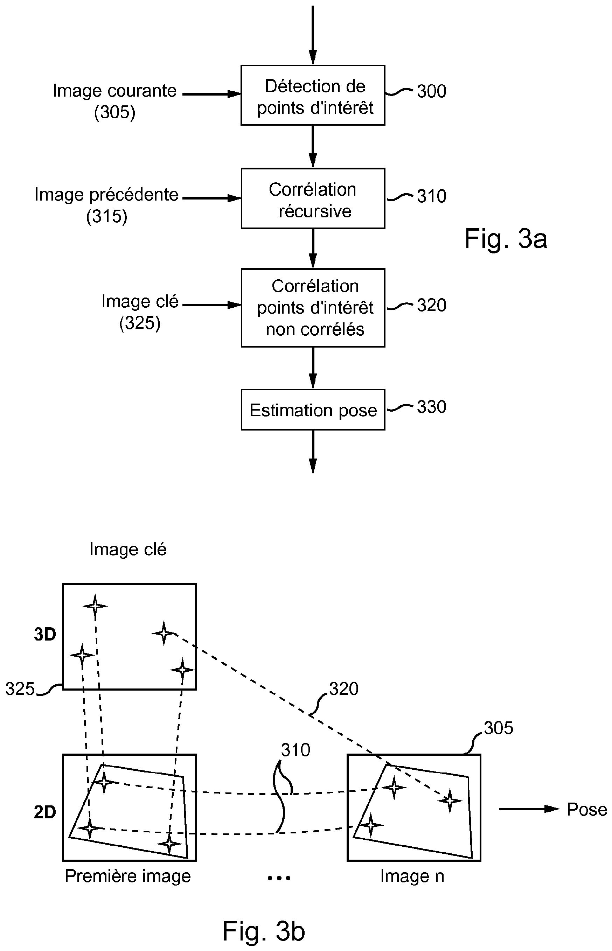

Durant la phase d'utilisation 110, les objets dont une représentation a été identifiée durant l'initialisation sont suivis dans la séquence d'images (étape 125) afin d'estimer la pose de ces objets (étape 130). La phase d'utilisation est décrite plus en détail en référence aux figures 3a, 7 et 9. Il est observé ici que lorsque l'objet suivi est perdu durant la phase d'utilisation, c'est-à-dire lorsque le système subit un décrochage, une nouvelle phase d'initialisation est, de préférence, effectuée.

La figure 2 illustre un exemple de mise en œuvre de la phase d'initialisation (105) de l'algorithme hybride 100 de suivi de représentation d'objets dans une séquence d'images représenté sur la figure 1.

Comme indiqué précédemment, la phase d'initialisation permet d'identifier un ou plusieurs objets situés dans le champs de vision d'un capteur d'images (par exemple une caméra) dont des représentations sont visibles dans les images issues de ce capteur et, dans un second temps, de fournir une pose aussi précise que possible pour chacun des objets identifiés.

Selon un mode de réalisation particulier, l'identification d'objets et l'estimation de leur pose sont basées sur la détermination de points d'intérêt et l'utilisation de structures de décision. Le principe consiste alors à appliquer un opérateur permettant de détecter des points d'intérêt tels que des points de type FAST, YAPE, HARRIS ou MSER dans une image donnée issue du capteur d'images. Les portions d'images situées autour des points d'intérêt identifiés sont comparées à des portions d'images mémorisées dans les structures de décision binaire utilisées afin d'obtenir une liste de probabilité qui vise à indiquer la ressemblance de ces points avec des points des objets (aussi appelés « classes ») déjà classifiés dans ces structures et qui forment la base de données de connaissances. Pour obtenir des résultats robustes et limiter les ressources de calcul nécessaire, des structures de décision de type FERNS sont avantageusement utilisées.

L'image courante 200 utilisée pour la phase d'initialisation est ici acquise du capteur d'images. Elle est, de préférence, lissée (étape 205), par exemple à l'aide d'un filtre Gaussien 3x3, afin de réduire la présence de bruit (celui-ci peut perturber les résultats statistiques obtenus lors du parcours de la structure de décision binaire).

Pour faciliter la mise en œuvre de ce filtre sur une plateforme légère telle qu'un téléphone mobile, il est optimisé. Une telle optimisation consiste, en particulier, à utiliser un filtre symétrique pouvant être représenté sous forme de puissance de deux de telle sorte que le filtrage s'effectue par décalage du codage des valeurs des pixels.

Une étape suivante a pour objet de détecter des points d'intérêt dans l'image courante lissée (étape 210). Selon un mode de réalisation préféré, les points d'intérêt détectés sont du type FAST.

Il est rappelé ici que les points d'intérêt de type FAST sont déterminés en créant un cercle de Bresenham d'un périmètre prédéterminé, par exemple 16 pixels, autour de chaque pixel de l'image. Chacun de ces points est considéré comme étant un point d'intérêt si le nombre de pixels voisins de ce cercle ayant tous une intensité plus grande ou plus faible que celle du pixel central est supérieur à un seuil prédéterminé (par exemple, 9, 10, 11 ou 12). En outre, une étape de post-traitement est généralement appliquée pour ne sélectionner que les points d'intérêt les plus pertinents dans un voisinage donné.

Après avoir détecté les points d'intérêt de l'image courante, les structures de décision 215 utilisées sont parcourues (étape 220) pour déterminer les meilleures correspondances 225 entre les portions d'image de l'image courante, situées autour de ces points d'intérêt détectés, et les portions d'image associées à des points d'intérêt préalablement mémorisées dans ces structures. Il est observé ici que durant la création des structures de décision (étape 230), effectuée de façon standard, plusieurs objets ont éventuellement été regroupés dans un même ensemble de structures. Le regroupement de plusieurs objets dans un même groupe vise à optimiser le procédé d'appariement en limitant le nombre d'étapes d'appariement et d'estimation d'erreur d'identification pour chacun des objets. Par conséquent, un seul sous ensemble des objets disponibles est parcouru au cours de l'étape 220 et seules les correspondances avec l'objet le plus fréquemment apparié sont conservées.

Les meilleurs appariements sont ensuite sélectionnés (étape 235). A cette fin, l'objet appartenant au groupe précédemment sélectionné qui présente le plus grand nombre d'appariements avec les valeurs de probabilité les plus fortes est choisi.

Un algorithme de type RANSAC est ensuite utilisé à partir des appariements préalablement sélectionnés (étape 240) pour reprojeter des points d'intérêt du modèles de l'objet identifié afin d'estimer une erreur d'identification de l'objet. Ainsi, s'il n'existe pas suffisamment de points d'intérêt correctement appariés, c'est-à-dire si l'erreur entre les points d'intérêt détectés, en nombre suffisant, et leurs reprojections à partir du modèle de l'objet (appelée *inliers* en terminologie anglo-saxonne) est supérieure à un seuil donné T (étape 245), aucun objet du groupe courant n'a été correctement identifié. Dans ce cas, les étapes précédentes sont répétées (étapes 220 à 240) pour le groupe d'objets suivant. Dans le contexte d'une plateforme peu puissante, il est avantageux d'utiliser des groupes contenant le plus grand nombre possible d'objets. Il faut cependant noter que deux objets qui présentent une texturation similaire devront idéalement être séparés afin de ne pas entacher la robustesse du procédé de reconnaissance.

Si, au contraire, il existe suffisamment de points correctement appariés, une pose précise 250 de l'objet identifié est estimée (étape 255), par exemple en utilisant un algorithme tel que celui de Levenberg-Marquardt.

La solution décrite en référence à la figure 2, basée ici sur la mise en œuvre de structures à ramifications multiples, présente de nombreux avantages parmi lesquels l'appariement robuste des points d'intérêt détectés dans l'image courante, un temps de traitement limité pour identifier un objet et estimer sa pose ainsi que la possibilité de regrouper des objets sous un même groupe de structures (important lorsque le nombre d'objet à reconnaître est élevé).

La construction de la structure à ramifications multiples est, de préférence, optimisée pour permettre de limiter la taille en mémoire occupée par chacun des objets (il est nécessaire d'utiliser environ 100 points pour représenter convenablement un objet dans la structure, ces 100 points occupant typiquement environ 1Mo).

Lorsqu'un ou plusieurs objets ont été identifiés dans l'image courante et que leurs poses estimées sont cohérentes, c'est-à-dire qu'un nombre suffisant d'appariements a une faible erreur de reprojection, il est possible d'utiliser les appariements et ces poses pour initier le procédé de suivi d'objet.

Selon un premier mode de réalisation, le procédé de suivi utilise des informations récursives des images précédentes et des informations d'une ou plusieurs images clés correspondant à l'objet suivi. Il est rappelé ici qu'une image clé peut être considérée comme une représentation bidimensionnelle d'un objet à laquelle est associée la pose tridimensionnelle de l'objet. Plusieurs images clés peuvent être utilisées pour représenter un objet selon plusieurs points de vue. Le choix d'une image clé parmi plusieurs est basé sur la similarité de la représentation des objets suivis et/ou sur la pose estimée de ces objets.

La figure 3, comprenant les figure 3a et 3b, illustre ce premier mode de réalisation. La figure 3a représente certaines étapes de l'algorithme de suivi tandis que la figure 3b illustre la mise en œuvre de cet algorithme.

Une première étape (étape 300) consiste à détecter des points d'intérêt d'une image courante 305. Bien que plusieurs types de points d'intérêt puissent être utilisés, les points d'intérêt utilisés ici sont du type FAST. Ils peuvent ainsi être déterminés sur une plateforme légère telle qu'un téléphone mobile.

Les portions d'images situées autour des points d'intérêt détectés sont alors comparées à celles extraites autour des points d'intérêt de l'image précédente 315 (ces points d'intérêt ayant été déterminés lors du traitement de l'image précédente ou lors de l'initialisation) afin d'établir la corrélation entre l'image précédente et l'image courante, c'est-à-dire d'établir une liste de correspondances entre des points d'intérêt de l'image précédente et de l'image courante (étape 310). Cette corrélation peut notamment être réalisée à l'aide d'un opérateur de comparaison d'intensité de portions d'images de type ZNCC (sigle de *Zero-mean Normal Cross Correlation* en terminologie anglo-saxonne). Chacun des points ainsi appariés possède ainsi un correspondant dans l'image clé (mémorisé récursivement), ce correspondant étant avantageusement désactivé pour la suite du procédé.

Les points d'intérêt de l'image courante non appariés avec des points d'intérêt de l'image précédente sont alors utilisés pour établir une corrélation entre l'image courante et l'image clé 325 utilisée (celle-ci peut notamment être déterminée selon la pose de l'objet estimée à partir de l'image précédente). A ces fins, les portions d'image autour des points d'intérêt actifs de l'image clé (c'est-à-dire n'ayant pas de correspondant dans l'image précédente) sont reprojetés selon la pose estimée à partir de l'image précédente puis comparées à celles associées aux points d'intérêt de l'image courante non appariés à des points d'intérêt de l'image précédente (étape 320). A nouveau, cette corrélation peut notamment être réalisée à l'aide d'un opérateur de comparaison d'intensité de portions d'images de type ZNCC entre les points reprojetés sur l'image courante et les points voisins de l'image courante.

La pose de l'objet est alors estimée (étape 330) en utilisant les correspondances établies entre les points d'intérêt de l'image courante avec des points d'intérêt de l'image précédente et de l'image clé.

Les erreurs de corrélation sont de préférence supprimées en utilisant la pose estimée de l'objet en comparant les positions des points détectés et appariés dans l'image courante avec les positions théoriques obtenues en reprojetant les coordonnées 3D correspondantes de l'image clé avec un seuil prédéterminé. Ainsi, seuls les points d'intérêt valides de l'image courante sont utilisés pour traiter l'image suivante.

Effectuer les appariements récursifs avec l'image précédente avant ceux effectués avec les points d'intérêt de l'image clé utilisée permet d'éviter de reprojeter une grande partie de l'image clé. Chaque appariement récursif a en effet une référence sur l'image clé et les points de l'image clé qui sont déjà appariés ne sont pas traités pour l'image courante. Cela permet un gain de temps de traitement important car les opérations de reprojection d'images et d'appariement sont particulièrement lourdes en termes de calcul.

Il est observé ici que si la pose relative d'une portion d'image de l'image courante similaire à une portion d'image de l'image précédente peut être estimée par analyse d'image comme décrit précédemment, elle peut également être estimée par prédiction à partir de l'évolution de la pose d'une portion d'image similaire observée dans un ensemble d'images précédentes.

Alors que ce premier mode de réalisation permet d'effectuer des traitements très rapides, la pose estimée n'est pas parfaite. Pour l'améliorer, il est possible d'ajouter une étape de suivi de points d'intérêt à l'aide d'un algorithme de type KLT (de préférence modifié pour limiter les besoins en termes de puissance de calcul).

Ainsi, selon ce second mode de réalisation, une étape (étape 310') de suivi de points d'intérêt est ajoutée après l'étape de corrélation récursive (étape 310). Elle a pour objet de déterminer le déplacement des points d'intérêt de l'image précédente non appariés avec des points d'intérêt de l'image courante, dans l'image courante.

Seuls les points d'intérêt de l'image clé non appariés dans l'image courante selon la corrélation récursive (étape 310) et le suivi de points d'intérêt (étape 310') sont alors reprojetés pour déterminer la corrélation entre l'image courante et l'image clé (étape 230).

L'estimation de la pose de l'objet est estimée de façon similaire à celle décrite en référence à la figure 3.

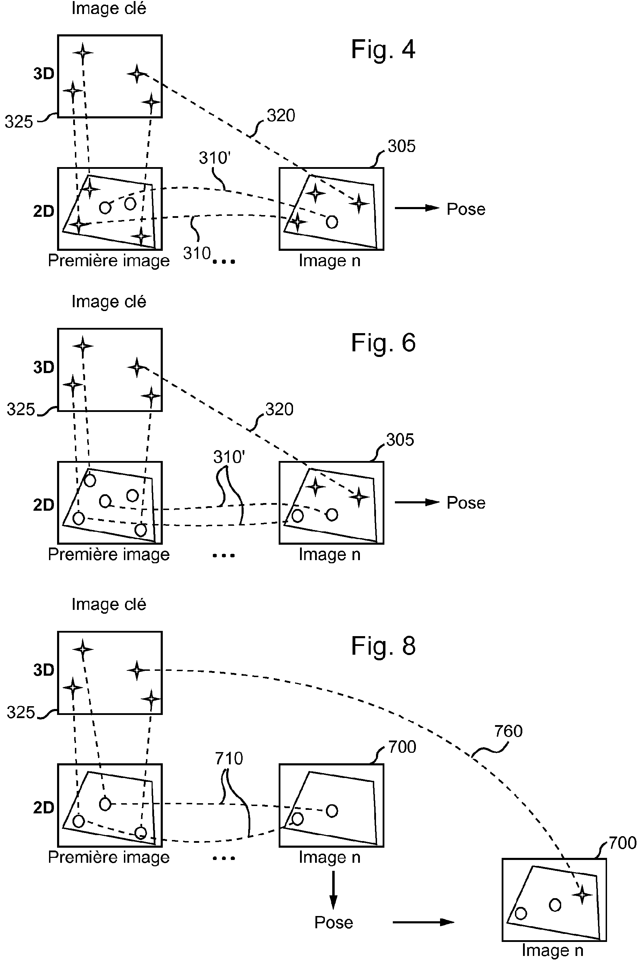

La figure 4 illustre schématiquement la mise en œuvre de cet algorithme de suivi.

Ce mode de réalisation permet d'obtenir de meilleurs résultats que le précédent (les positions estimées sont plus stables et plus robustes au flou optique). Il est également possible d'utiliser un nombre moindre de points d'intérêt. Néanmoins, une dérive peut être observée. Par ailleurs, il est plus complexe à mettre en œuvre en raison du paramétrage entre les appariements récursifs et les appariements de type KLT.

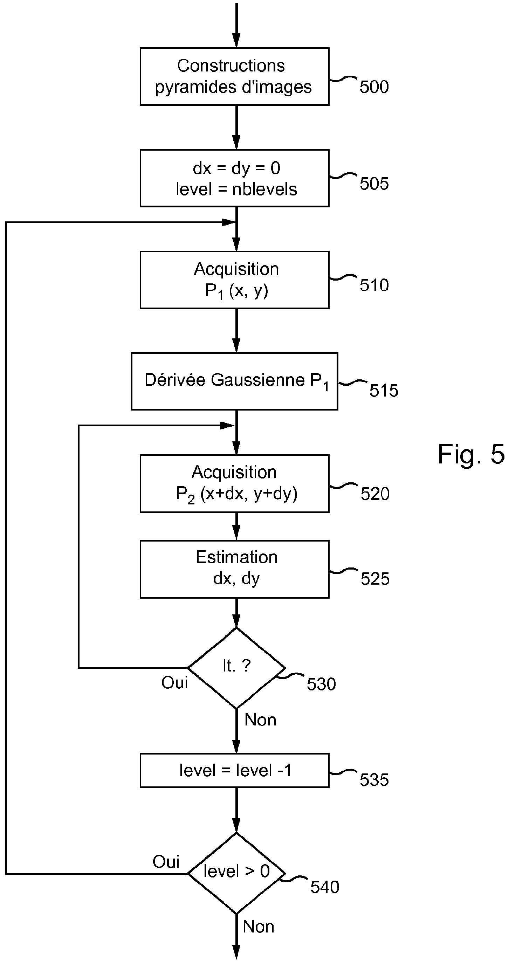

La figure 5 illustre schématiquement un exemple d'algorithme de type KLT mis en œuvre dans ce mode de réalisation pour estimer la transformation affine entre des éléments d'une image précédente et d'une image courante. L'algorithme KLT est ici modifié pour permettre sa mise en œuvre sur une plateforme légère telle qu'un téléphone mobile.

Une première étape (étape 500) a pour objet de construire une première pyramide d'images pour l'image courante et une seconde pour l'image précédente. Chacune de ces pyramides comprend ici cinq niveaux, le niveau le plus bas correspondant à l'image issue du capteur d'images.

De façon avantageuse, les images sont lissées avec un filtre gaussien de noyau 5x5 avant d'être sous-échantillonnées (leurs dimensions respectives sont par exemple divisées par deux). Les coefficients du noyau de lissage sont de préférence des valeurs entières, idéalement des puissances de deux, afin de réduire le nombre d'opérations élémentaires effectuées. En outre le sous-échantillonnage est ici effectué sans interpolation bilinéaire, celui-ci n'étant pas nécessaire en raison du lissage.

Les variables *dx* et *dy* représentant le déplacement d'une portion d'image considérée entre l'image précédente et l'image courante sont initialisées à zéro (étape 505). De même, la variable *level,* représentant le niveau courant de la pyramide est initialisée à la valeur la plus élevée (appelée *nblevels*)*,* ici cinq. Il est observé ici que les variables *dx* et *dy* permettent de définir des coordonnées sous-pixels, c'est-à-dire dont la résolution est inférieure à la taille d'un pixel. Cependant, pour simplifier les calculs, ces derniers sont effectués à un facteur d'échelle près afin de ne traiter que des nombres entiers.

La portion d'image P₁ centrée sur le point d'intérêt traité, ayant (*x, y*) pour coordonnées, est ensuite extraite de l'image précédente au niveau *level* de la pyramide (étape 510). Une telle portion d'image a typiquement une taille de 5x5 ou 7x7 pixels.

La dérivée gaussienne de cette portion d'image est ensuite déterminée (étape 515). Ce calcul est de préférence effectué à un facteur d'échelle près pour ne travailler qu'avec des nombres entiers.

La portion d'image P₂ centrée sur le point ayant pour coordonnées *(x+dx, y+dy)* est ensuite extraite de l'image courante au niveau *level* de la pyramide (étape 520).

Les valeurs des variables *dx* et *dy* sont alors estimées (étape 525), ici selon l'algorithme de Gauss-Newton. Cette étape permet d'estimer les variables *dx* et *dy* qui minimisent la différence entre une portion de l'image précédente et une portion de l'image courante. Cette estimation est itérée plusieurs fois pour permettre une convergence vers un minimum local conduisant à un minimum global grâce à l'utilisation des différents niveaux d'échelle d'images. A nouveau, l'utilisation d'entiers pour ces calculs permet un gain de performance important.

Un test est ensuite effectué (étape 530) pour déterminer si le nombre d'itérations prédéterminé de cet algorithme est atteint ou non et si les variables *dx* et *dy* sont dans une plage prédéterminée. Dans la négative, les étapes précédentes (étapes 520 et 525) sont répétées. Dans le cas contraire, la variable *level* est incrémentée de un (étape 535) et un test est effectué (étape 540) pour déterminer si tous les niveaux des pyramides ont été traités. Les étapes 510 à 540 sont répétées jusqu'à ce que les variables *dx* et *dy* aient été évaluées sur les images de plus grande résolution.

De façon avantageuse, seuls quelques points d'intérêt sont traités aux niveaux d'échelle de basse résolution (c'est-à-dire aux niveaux supérieurs) des pyramides d'images. Ainsi, seul le point central de l'objet à suivre est de préférence traité dans le niveau le plus élevé (par exemple 40x30) et quatre points uniformément répartis sur cet objet sont traités dans le niveau directement inférieur (par exemple 80x60). Ces niveaux d'échelles supérieurs permettent d'estimer approximativement des mouvements importants entre deux images. Les niveaux d'échelle inférieurs sont ici traités de façon standard. La translation (*dx, dy*) estimée dans un niveau d'échelle inférieur est ici appliquée au niveau directement inférieur. Ces niveaux inférieurs permettent d'affiner la position des points retrouvés.

Selon un troisième mode de réalisation, l'étape de corrélation décrite en référence à la figure 3 (étape 310) est remplacée par une étape de suivi de points d'intérêt de type KLT telle que décrite en référence à la figure 4 (étape 310'). En d'autres termes, le suivi de points d'intérêt entre l'image précédente et l'image courante n'est réalisé ici qu'à l'aide d'un algorithme de type KLT.

La figure 6 illustre schématiquement la mise en œuvre de cet algorithme de suivi.

Ce mode de réalisation permet d'obtenir une bonne stabilité des poses estimées qui sont en outre robustes au flou optique. Il est également possible d'utiliser un nombre moindre de points d'intérêt. Cependant, une dérive importante peut être observée.

Selon un quatrième mode de réalisation, le procédé de suivi ne met en œuvre qu'un algorithme de type KLT sans nécessiter la détection de point d'intérêt dans l'image courante. Ce mode de réalisation, stable et robuste, peut être mis en œuvre en temps réel sur une plateforme légère telle qu'un téléphone mobile en utilisant l'algorithme KLT modifié décrit précédemment.

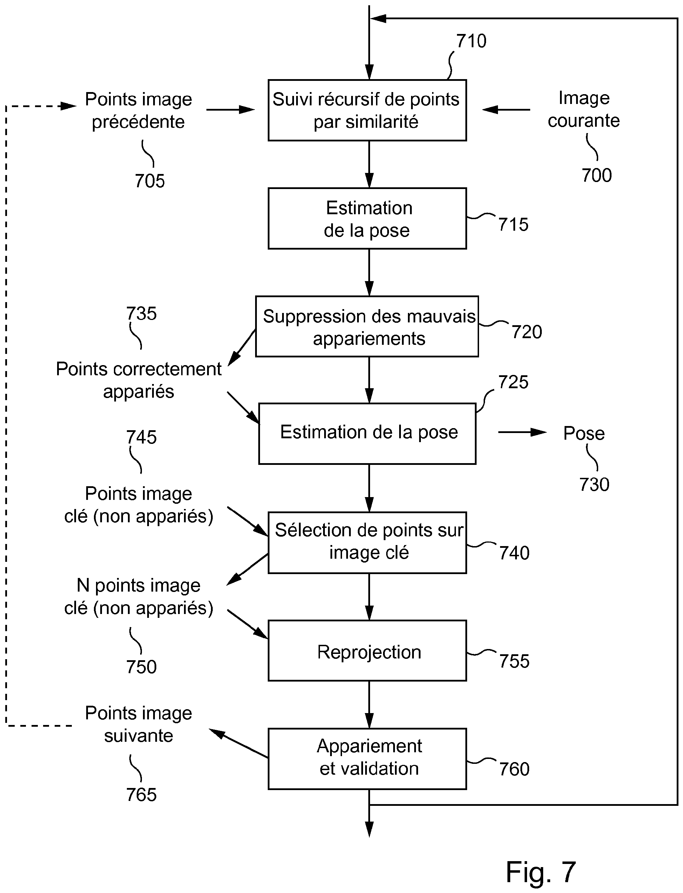

La figure 7 illustre schématiquement certaines étapes de l'algorithme de suivi d'objet selon ce quatrième mode de réalisation.

Comme illustré, des points préalablement déterminés sont suivis de façon récursive en recherchant des portions d'images similaires dans les images précédente et courante. Une pose est ensuite estimée grâce à ces correspondances 2D/3D (les coordonnées 3D sont données par la position des points d'intérêt dans l'image clé étant observé que les points suivis récursivement conservent une référence initiale sur des points d'intérêt de l'image clé). De nouveaux points d'intérêt sont ensuite sélectionnés dans l'image clé et les points correspondants sont recherchés dans l'image courante pour permettre le traitement de l'image suivante.

Plus précisément, une première étape consiste à suivre dans l'image courante 700 les points 705 identifiés dans l'image précédente ou les points appariés avec l'image clé après la phase d'initialisation (étape 710). Ce suivi de points est ici réalisé à l'aide de l'opérateur KLT modifié décrit précédemment. Il permet d'obtenir, pour chacun des points ainsi identifiés dans l'image précédente, un point correspondant dans l'image courante.

Les points ainsi suivis permettent d'obtenir une série de correspondances 2D/3D (position 2D des points dans l'image courante et position 3D dans l'image clé). Comme indiqué précédemment, ces correspondances sont ici estimées avec une précision sous-pixel.

Cet ensemble de correspondances est ensuite utilisé dans un procédé d'estimation de pose (étapes 715, 720 et 725) qui permet d'évaluer un vecteur d'état à six degrés de liberté (trois degrés de position et trois degrés d'orientation) caractérisant le déplacement de l'objet suivi entre l'image précédente et l'image courante.

A ces fins, une étape a pour objet d'estimer une première pose (étape 715) pouvant être utilisée pour supprimer les appariements erronés issus du suivi de points (étape 720). La pose est ici estimée de façon standard selon l'appariement des points des images précédente et courante.

Pour supprimer les appariements erronés issus du suivi de points, un seuil de reprojection maximal autorisé est utilisé (par exemple une distance euclidienne de 4 pixels) afin de vérifier que les points identifiés dans l'image précédente et reprojetés selon la pose évaluée sont conformes à cette pose. Pour cela, les coordonnées 3D de chaque point identifié dans l'image précédente sont projetées en utilisant la pose préalablement estimée. L'erreur de reprojection est donnée par la distance euclidienne entre les coordonnées 2D reprojetées et les coordonnées 2D suivies du point suivi.

La pose 730 de l'objet suivi dans l'image courante est alors évaluée (étape 725) en n'utilisant que les points 735 correctement appariés.

De façon optionnelle, il est possible d'associer un poids à chacune des correspondances considérées comme correctes en utilisant une fonction de pondération d'erreur basée sur la distance entre les points suivis et les points reprojetés. Une telle pondération d'erreur est typiquement calculée en fonction de la médiane estimée avec l'ensemble des erreurs de reprojection au carré (ou résiduels) et l'erreur de reprojection au carré pour l'échantillon courant. Il est ainsi possible d'améliorer la pose de l'objet suivi à partir de points correctement appariés en fonction de la pondération. Celle-ci intervient directement dans les calculs pour chacune des itérations de l'algorithme de Gauss-Newton. Lors cette étape, le seuil de reprojection maximal autorisé est réduit (par exemple à une distance euclidienne de 2 ou 1 pixel(s)) afin d'éliminer les points qui auraient tendance à dériver lors de l'algorithme de suivi KLT.

Après avoir estimé la pose de l'objet suivi, les points 765 devant être utilisés pour suivre l'objet dans l'image suivante sont déterminés. De façon avantageuse, ces points regroupent des points issus de l'image précédente correctement appariés dans l'image courante (c'est-à-dire des points validés lors de l'étape de reprojection) et des points d'intérêt de l'image clé. En d'autres termes, les points utilisés dans l'image suivante sont la combinaison des points suivis correctement dans l'image courante à partir de l'image précédente et de nouveaux points obtenus en utilisant l'image clé. Cette combinaison de points permet d'éviter des dérives du procédé de suivi d'objet.

Les points d'intérêt 750 de l'image clé devant être utilisés sont déterminés (étape 740) à partir des points d'intérêt 745 de l'image clé par reprojection dans l'image courante. Plusieurs types de sélection des points d'intérêt de l'image clé peuvent être mis en oeuvre :
- sélection des points d'intérêt en fonction de la taille de l'objet suivi dans l'image courante. La taille de l'objet dans l'image courante étant connue (surface en pixels dans l'image courante), il est possible de sélectionner des points d'intérêt selon l'échelle la plus pertinente. Par exemple, lorsque l'objet est proche de la caméra et que l'image courante traitée par le procédé est de 320×240 pixels, il est peut être conseillé de choisir les points d'intérêt correspondant au niveau d'échelle le plus proche de cette valeur (320×240). Cette sélection permet d'identifier des points d'intérêt pouvant être suivis de façon robuste lorsque l'objet suivi est approché ou éloigné face à la caméra. Cependant, beaucoup de points d'intérêt peuvent être sélectionnés de cette façon, ce qui peut entraîner une quantité de calcul importante.
- sélection des points d'intérêt selon une grille combinée avec l'image clé. Une grille de taille NxM est ici construite sur l'image clé afin de choisir les points d'intérêt. Il est ainsi possible de sélectionner un point d'intérêt, de préférence le plus pertinent, par cellule de la grille visible sur l'image courante. Par exemple, 35 points d'intérêt de l'image clé peuvent être sélectionnés pour une grille ayant une taille de 7×5. Lorsque l'objet sort du champ de vue de la caméra, l'algorithme de sélection de point peut sélectionner plusieurs points par cellule de la grille afin de conserver un nombre de points suivis constant. Cette grille présente le double avantage de permettre la sélection de points d'intérêt uniformément répartis sur la surface de l'objet (ce qui permet notamment de stabiliser la pose finale estimée) et d'éviter de choisir des points d'intérêt proches les uns des autres (pouvant être considérés comme inutiles).

Les portions d'image de l'image clé, situées autour des points d'intérêt, sont ensuite extraites et reprojetées (étape 755) selon les informations de pose courante précédemment estimée. Il est observé que les portions d'image reprojetées sont très similaires à l'image courante avec, en général, une importante variation d'intensité. Cette reprojection est coûteuse en termes de calcul car pour chaque pixel de l'image de destination, il faut retrouver les coordonnées sous-pixel dans l'image source en fonction de la transformation homographique inverse qui lie les deux images. Ainsi, un pixel dans la portion d'image de destination correspond à une interpolation de plusieurs pixels de l'image source. Afin d'optimiser le calcul, l'interpolation peut avantageusement être remplacée en utilisant la technique de plus proche voisin.

Dans une étape suivante, une comparaison est effectuée entre les portions de l'image clé reprojetées et les portions de l'image courante correspondantes pour ne valider que les points d'intérêt sélectionnés associés aux portions d'image reprojetées similaires aux portions de l'image courante correspondantes (étape 760). Cette étape de validation peut comprendre les étapes suivantes,
- appariement des portions d'image associées aux points d'intérêt sélectionnés, reprojetées dans l'image courante en fonction de la pose courante. Le procédé de suivi KLT est de préférence robuste aux changements d'illumination car les différences colorimétriques entre l'image clé et l'image courante peuvent être importantes ; et,
- validation des appariements effectués en utilisant, par exemple, un opérateur de type ZNCC ou de type SAD (sigle de *Sum of Absolute Différences* en terminologie anglo-saxonne). Cette étape de validation par comparaison de portions d'image est importante pour empêcher d'éventuelles dérives liées à l'opérateur de suivi KLT utilisé.

Les points d'intérêt ainsi sélectionnés et validés sont ajoutés à l'ensemble 765 de points récursifs devant être utilisés pour suivre l'objet dans l'image suivante.

La figure 8 illustre schématiquement la mise en œuvre de cet algorithme de suivi.

Alternativement, la pose de l'objet suivi dans l'image courante peut être estimée après avoir sélectionné et validé les points devant être utilisés pour suivre l'objet dans l'image suivante pour éviter des dérives qui peuvent apparaître sur certains types d'objets. Ceci peut notamment être observé lorsque l'objet présente des contours marqués, par exemple des bords noirs, car les points d'intérêt utilisés par le procédé de suivi KLT peuvent avoir tendance à suivre ces contours et à donner de mauvaises correspondances 2D/3D (appelés *outliers* en terminologie anglo-saxonne).

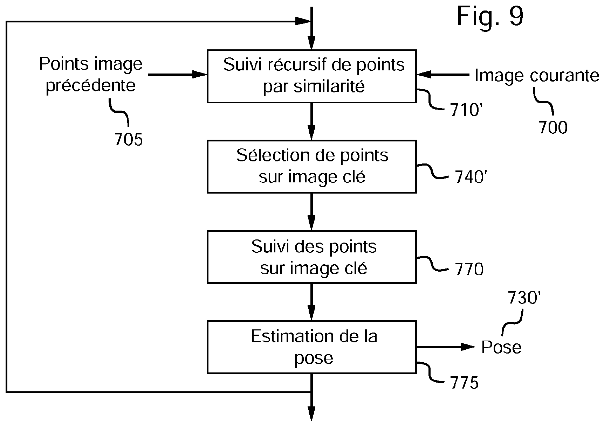

La figure 9 illustre schématiquement certaines étapes d'une telle variante de l'algorithme de suivi d'objet selon le quatrième mode de réalisation.

Comme précédemment, une première étape (étape 710') a pour objet de suivre dans l'image courante 700 les points 705 identifiés dans l'image précédente ou les points appariés avec l'image clé après la phase d'initialisation. A nouveau, ce suivi de points est ici réalisé à l'aide de l'opérateur KLT modifié décrit précédemment. Il permet d'obtenir, pour chacun des points ainsi identifiés dans l'image précédente, un point correspondant dans l'image suivante.

Une étape suivante (étape 740') a pour objet de sélectionner des points d'intérêt dans l'image clé. Cette étape est similaire à l'étape 740. Cependant, les points d'intérêt sélectionnés étant utilisés pour estimer la pose de l'objet suivi dans l'image courante, ils ne peuvent pas être reprojetés par rapport à cette pose mais, éventuellement, par rapport à la pose déterminée selon l'image précédente.

Afin d'améliorer et de simplifier les suivis de points récursifs (étape 710') et de points de l'image clé (étape 740'), un modèle linéaire de prédiction de poses peut être avantageusement utilisé. Ainsi, en utilisant un historique de poses précédentes, il est possible de prédire la position des points d'intérêt recherchés dans l'image courante et ainsi éviter d'avoir à construire et à parcourir des pyramides d'images de tailles importantes, les niveaux de résolution les plus faibles n'étant plus requis.

Des portions d'image autour des points d'intérêt sélectionnés sont extraites et reprojetées selon la pose de l'objet suivi dans l'image précédente afin d'être comparées à des portions de l'image courante selon un algorithme de suivi, ici l'algorithme KLT, afin d'apparier ces points d'intérêt avec des points correspondants de l'image courante (étape 770). Comme en ce qui concerne les appariements entre points de l'image précédente et points de l'image courante permettant de déterminer la transformation affine entre ces points de l'image précédente et les points correspondants de l'image courante, ces appariements entre points de l'image clé et points correspondants de l'image courante permettent de déterminer la transformation affine entre les points d'intérêt sélectionnés de l'image clé et les points correspondants de l'image courante.

Les appariements entre des points de l'image précédente et les points correspondants de l'image courante et entre des points de l'image clé et les points correspondants de l'image courante permettent de déterminer la pose 730' de l'objet suivi de façon standard (étape 775)

Le procédé décrit ici, mis en œuvre selon l'un des modes de réalisation présentés précédemment, est particulièrement adapté pour le suivi d'objets non planaires, notamment dans un système ayant des ressources de traitement limitées tel qu'un téléphone mobile. Il peut ainsi être utilisé, par exemple, pour suivre des visages dans une séquence d'images.

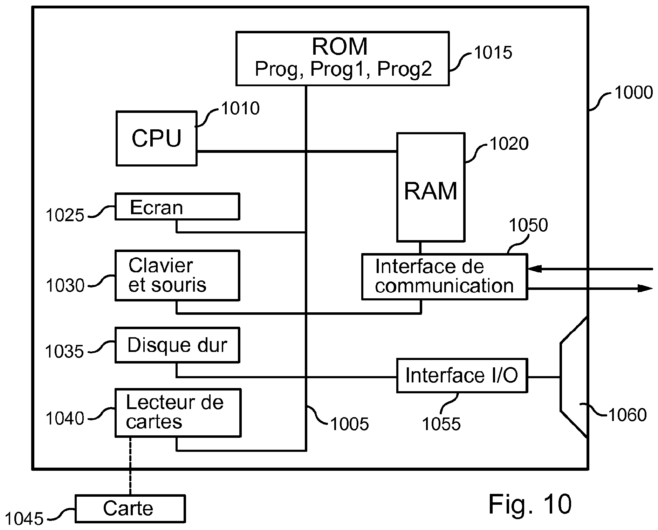

La figure 10 illustre un exemple d'architecture matérielle adaptée à mettre en œuvre l'invention, notamment les algorithmes décrit en référence aux figures 1, 2, 3a, 5, 7 et 9. Un tel dispositif est, par exemple, un téléphone mobile, un assistant personnel ou un ordinateur personnel portable ou de type *netbook.* Le dispositif 1000 comporte ici un bus de communication 1005 auquel sont reliés :
- une unité centrale de traitement ou microprocesseur 1010 (CPU, sigle de *Central Processing Unit* en terminologie anglo-saxonne) ;
- une mémoire morte 1015 (ROM, acronyme de *Read Only Memory* en terminologie anglo-saxonne) pouvant comporter les programmes nécessaires à la mise en œuvre de l'invention ;
- une mémoire vive ou mémoire cache 1020 (RAM, acronyme de *Random Access Memory* en terminologie anglo-saxonne) comportant des registres adaptés à enregistrer des variables et paramètres créés et modifiés au cours de l'exécution des programmes précités ; et
- une interface de communication 1050 adaptée à transmettre et à recevoir des données.

Le dispositif 1000 dispose également, de préférence, des éléments suivants :
- un écran 1025 permettant notamment de visualiser une scène réelle telle qu'observée par un capteur d'images (1060) relié au bus 1005 via une interface d'entrée/sortie (1055), de préférence augmentée d'objets virtuels, et pouvant servir d'interface graphique avec l'utilisateur qui pourra interagir avec les programmes selon l'invention, à l'aide d'un clavier et d'une souris 1030 ou d'un autre dispositif de pointage tel qu'un écran tactile ou une télécommande ;
- d'un disque dur 1035 pouvant comporter les programmes précités et des données traitées ou à traiter selon l'invention, par exemple des tables de correction ; et
- d'un lecteur de cartes mémoires 1040 adapté à recevoir une carte mémoire 1045 et à y lire ou à y écrire des données traitées ou à traiter selon l'invention.

Le bus de communication permet la communication et l'interopérabilité entre les différents éléments inclus dans le dispositif 1000 ou reliés à lui. La représentation du bus n'est pas limitative et, notamment, l'unité centrale est susceptible de communiquer des instructions à tout élément du dispositif 1000 directement ou par l'intermédiaire d'un autre élément du dispositif 1000.

Le code exécutable de chaque programme permettant au dispositif programmable de mettre en œuvre les processus selon l'invention, peut être stocké, par exemple, dans le disque dur 1035 ou en mémoire morte 1015.

Selon une variante, la carte mémoire 1045 peut contenir des données, notamment une table de correspondance entre les événements détectés et les commandes pouvant être sollicitées, ainsi que le code exécutable des programmes précités qui, une fois lu par le dispositif 1000, est stocké dans le disque dur 1035.

Selon une autre variante, le code exécutable des programmes pourra être reçu, au moins partiellement, par l'intermédiaire de l'interface 1050, pour être stocké de façon identique à celle décrite précédemment.

De manière plus générale, le ou les programmes pourront être chargés dans un des moyens de stockage du dispositif 1000 avant d'être exécutés.

L'unité centrale 1010 va commander et diriger l'exécution des instructions ou portions de code logiciel du ou des programmes selon l'invention, instructions qui sont stockées dans le disque dur 1035 ou dans la mémoire morte 1015 ou bien dans les autres éléments de stockage précités. Lors de la mise sous tension, le ou les programmes qui sont stockés dans une mémoire non volatile, par exemple le disque dur 1035 ou la mémoire morte 1015, sont transférés dans la mémoire vive 1020 qui contient alors le code exécutable du ou des

Naturellement, pour satisfaire des besoins spécifiques, une personne compétente dans le domaine de l'invention pourra appliquer des modifications dans la description précédente, tant que ces modifications sont couvertes par les revendications.

## Revendications

1. Procédé pour ordinateur de suivi hybride d'une représentation d'au moins un objet dans une séquence d'images à l'aide d'au moins une image clé (325), ce procédé étant **caractérisé en ce qu'**il comprend les étapes suivantes,
- acquisition d'une première (315) et d'une seconde image (305) de ladite séquence d'images, chacune comprenant une représentation dudit au moins un objet;
- identification d'au moins une première portion d'image de ladite première image, ladite au moins une première portion d'image de ladite première image comprenant au moins une partie d'une représentation dudit au moins un objet;
- extraction d'au moins une seconde portion d'image de ladite au moins une image clé, ladite au moins une seconde portion d'image de ladite au moins une image clé comprenant au moins une partie d'une représentation dudit au moins un objet;
- estimation d'au moins une première pose relative dudit au moins un objet dans au moins une première portion d'image de ladite seconde image, similaire à ladite au moins une première portion d'image de ladite première image, selon ladite au moins une première portion d'image de ladite première image,
ladite étape d'estimation de ladite au moins une première pose relative dudit au moins un objet dans ladite au moins une première portion d'image de ladite seconde image comprenant une étape de recherche (310, 710, 710'), dans ladite seconde image, de ladite au moins une première portion d'image de ladite seconde image, similaire à ladite au moins une première portion d'image de ladite première image;
- recherche (320, 760, 770) d'au moins une seconde portion d'image de ladite seconde image, similaire à ladite au moins une seconde portion d'image de ladite image clé;
ladite étape de recherche d'au moins une seconde portion d'image de ladite seconde image comprenant une étape de reprojection de ladite au moins une seconde portion d'image de ladite image clé selon une pose estimée dudit au moins un objet à partir de la première image, et
- estimation (330, 725, 775) de la pose relative dudit au moins un objet selon ladite au moins une première pose relative et au moins une seconde pose relative dudit au moins un objet dans ladite au moins une seconde portion d'image de ladite seconde image, similaire à ladite au moins une seconde portion d'image de ladite image clé ;
- ladite au moins une seconde portion de ladite image clé étant extraite de ladite au moins une image clé selon au moins un point d'intérêt de ladite image clé préalablement déterminé;
- la procédé comprenant en outre une étape de sélection (740, 740') dudit au moins un point d'intérêt;
- ladite étape de sélection (740, 740') dudit au moins un point d'intérêt comprenant une sélection des points d'intérêt en fonction de la taille de l'objet suivi dans ladite seconde image ou une sélection des points d'intérêt selon une grille combinée avec l'image clé.

2. Procédé selon la revendication 1 selon lequel ladite étape d'identification de ladite au moins une première portion d'image de ladite première image comprend une étape d'extraction (510) de ladite au moins une première portion d'image de ladite première image.

3. Procédé selon la revendication 2 selon lequel ladite étape de recherche de ladite au moins une première portion d'image de ladite seconde image similaire à ladite au moins une première portion d'image de ladite première image met en oeuvre un algorithme de recherche de type KLT.

4. Procédé selon la revendication 1 comprenant en outre une étape de validation (760) dudit au moins un point d'intérêt sélectionné.

5. Procédé selon l'une quelconque des revendications précédentes selon lequel ladite étape de recherche d'au moins une seconde portion d'image de ladite seconde image, similaire à ladite au moins une seconde portion d'image de ladite image clé, met en œuvre un algorithme de type KLT.

6. Procédé selon l'une quelconque des revendications 1 à 3 comprenant en outre une étape de détermination d'au moins un point d'intérêt dans ladite au moins une seconde image.

7. Procédé selon la revendication précédente selon lequel ladite étape de recherche de ladite au moins une première portion d'image de ladite seconde image, similaire à ladite au moins une première portion d'image de ladite première image met en oeuvre au moins deux algorithmes différents de recherche de portion d'image par similarité.

8. Procédé selon l'une quelconque des revendications précédentes dans lequel ladite étape d'estimation d'une première pose relative et/ou ladite étape de recherche d'au moins une seconde portion d'image de ladite seconde image comprennent une étape de prédiction de pose utilisant au moins un résultat d'estimation de la pose relative dudit au moins un objet effectuée sur des images précédentes.

9. Programme d'ordinateur comprenant des instructions adaptées à la mise en oeuvre de chacune des étapes du procédé selon l'une quelconque des revendications précédentes lorsque ledit programme est exécuté sur un ordinateur.

10. Dispositif comprenant des moyens adaptés à la mise en œuvre de chacune des étapes du procédé selon l'une quelconque des revendications 1 à 8.

## Patentansprüche

1. Verfahren zur hybriden Verfolgung einer Darstellung mindestens eines Objekts in einer Bildfolge unter Verwendung mindestens eines Schlüsselbildes (325), wobei das Verfahren auf einem Computer implementiert ist und **dadurch gekennzeichnet ist, dass** es die folgenden Schritte umfasst,
- Erfassung eines ersten (315) und eines zweiten (305) Bildes der Bildsequenz, die jeweils eine Darstellung des mindestens einen Objekts umfassen;
- Identifizierung von mindestens einem ersten Bildabschnitt des ersten Bildes, wobei der mindestens eine erste Bildabschnitt des ersten Bildes mindestens einen Teil einer Darstellung des mindestens einen Objekts umfasst;
- Extraktion mindestens eines zweiten Bildabschnitts des mindestens einen Schlüsselbildes, wobei der mindestens eine zweite Bildabschnitt des mindestens einen Schlüsselbildes mindestens einen Teil einer Darstellung des mindestens einen Objekts umfasst;
- Schätzung mindestens einer ersten relativen Pose des mindestens einen Objekts in mindestens einem ersten Bildabschnitt des zweiten Bildes, ähnlich dem mindestens einen ersten Bildabschnitt des ersten Bildes, gemäß dem mindestens einen ersten Bildabschnitt des ersten Bildes,
wobei der Schätzschritt der mindestens einen ersten relativen Pose des mindestens einen Objekts in dem mindestens einen ersten Bildabschnitt des zweiten Bildes einen Suchschritt (310, 710, 710') in dem zweiten Bild nach dem mindestens einen ersten Bildabschnitt des zweiten Bildes umfasst, der dem mindestens einen ersten Bildabschnitt des ersten Bildes ähnlich ist,
- Suchen (320, 760, 770) nach mindestens einem zweiten Bildabschnitt des zweiten Bildes, der dem mindestens einen zweiten Bildabschnitt des Schlüsselbildes ähnlich ist;
wobei der Suchschritt nach mindestens einem zweiten Bildabschnitt des zweiten Bildes einen Reprojizierungsschritt des mindestens einen zweiten Bildabschnitts des Schlüsselbildes gemäß einer geschätzten Pose des mindestens einen Objekts aus dem ersten Bild umfasst, und
- Schätzung (330, 725, 775) der relativen Pose des mindestens einen Objekts gemäß der mindestens einen ersten relativen Pose und der mindestens einen zweiten relativen Pose des mindestens einen Objekts in dem mindestens einen zweiten Bildabschnitt des zweiten Bildes, ähnlich dem mindestens einen zweiten Bildabschnitt des Schlüsselbildes;
- wobei der mindestens eine zweite Abschnitt des Schlüsselbildes aus dem mindestens einen Schlüsselbild in Übereinstimmung mit mindestens einem vorbestimmten Interessenspunkt des Schlüsselbildes extrahiert wird;
- wobei das Verfahren ferner einen Auswahlschritt (740, 740') des mindestens einen Interessenspunkts umfasst;
- wobei der Auswahlschritt (740, 740') des mindestens einen Interessenspunkts eine Auswahl von Interessenspunkten als Funktion einer Größe des im zweiten Bild verfolgten Objekts oder einer Auswahl der Interessenspunkte gemäß einem mit dem Schlüsselbild kombinierten Gitter umfasst.

2. Verfahren nach Anspruch 1, wobei der Identifizierungsschritt des mindestens einen ersten Bildabschnitts des ersten Bildes einen Extraktionsschritt (510) des mindestens einen ersten Bildabschnitts des ersten Bildes umfasst.

3. Verfahren nach Anspruch 2, bei dem der Suchschritt für den mindestens einen ersten Bildabschnitt des zweiten Bildes, ähnlich dem mindestens einen ersten Bildabschnitt des ersten Bildes, einen Suchalgorithmus vom Typ KLT implementiert.

4. Verfahren nach Anspruch 1, ferner umfassend einen Validierungsschritt (760) des mindestens einen ausgewählten Interessenspunkt.

5. Verfahren nach einem der vorhergehenden Ansprüche, wobei der Suchschritt mindestens eines zweiten Bildabschnitts des zweiten Bildes, ähnlich dem mindestens einen zweiten Bildabschnitt des Schlüsselbildes, einen Algorithmus vom Typ KLT implementiert.

6. Verfahren nach einem der Ansprüche 1 bis 3, ferner umfassend einen Bestimmungsschritt von mindestens einem Interessenspunkt in dem mindestens einen zweiten Bild.

7. Verfahren nach einem der vorhergehenden Ansprüche, bei dem der Suchschritt für den mindestens einen ersten Bildabschnitt des zweiten Bildes, der dem mindestens einen ersten Bildabschnitt des ersten Bildes ähnlich ist, mindestens zwei verschiedene Algorithmen der Bildabschnittssuche durch Ähnlichkeit implementiert.

8. Verfahren nach einem der vorhergehenden Ansprüche, wobei der Schätzungsschritt einer ersten relativen Pose und/oder der Suchschritt nach mindestens einem zweiten Bildabschnitt des zweiten Bildes einen Posenvorhersageschritt unter Verwendung mindestens eines Ergebnisses der Schätzung der relativen Pose des mindestens einen Objekts, die an vorhergehenden Bildern durchgeführt wurde, umfasst.

9. Computerprogramm, umfassend Anweisungen, die geeignet sind, jeden der Schritte des Verfahrens nach einem der vorhergehenden Ansprüche zu implementieren, wenn das Programm auf einem Computer ausgeführt wird.

10. Gerät umfassend Mittel, die geeignet sind, jeden der Schritte des Verfahrens nach einem der Ansprüche 1 bis 8 auszuführen.

## Claims

1. A computer method for hybrid tracking of a representation of at least one object in an image sequence using at least one keyframe (325), said method being **characterized in that** it comprises the following steps,
- acquiring of a first (315) and of a second (305) image from said image sequence, each comprising a representation of said at least one object;
- identifying at least one first image portion of said first image, said at least one first image portion of said first image comprising at least part of a representation of said at least one object;
- extracting of at least one second image portion of said at least one key image, said at least one second image portion of said at least one key image comprising at least part of a representation of said at least one object;
- estimating at least one first relative pose of said at least one object in at least one first image portion of said second image, similar to said at least one first image portion of said first image, according to said at least one first image portion of said first image;
said step of estimating said at least one first relative pose of said at least one object in said at least one first image portion of said second image comprising a step of searching (310, 710, 710'), in said second image, for said at least one first image portion of said second image similar to said at least one first image portion of said first image
- searching (320, 760, 770) for at least one second image portion of said second image, similar to said at least one second image portion of said key frame said step of searching for at least one second image portion of said second image comprising a step of reprojecting said at least one second image portion of said key image according to an estimated pose of said at least one object from the first image, and
- estimating (330, 725, 775) the relative pose of said at least one object according to said at least one first relative pose and at least one second relative pose of said at least one object in said at least one second image portion of said second image, similar to said at least one second image portion of said key image;
- said at least one second portion of said key image being extracted from said at least one key image according to at least one previously determined point of interest of said key image;
- the method further comprising a step of selecting (740, 740') said at least one point of interest
- said step of selecting (740, 740') said at least one point of interest comprising a selection of the points of interest as a function of the size of the object tracked in said second image or a selection of the points of interest according to a grid combined with the key image.

2. The method of claim 1 wherein said step of identifying said at least one first image portion of said first image comprises a step of extracting (510) said at least one first image portion of said first image.

3. The method of claim 2 wherein said step of searching for said at least one first image portion of said second image similar to said at least one first image portion of said first image implements a KLT type search algorithm.

4. The method of claim 1 further comprising a validation step (760) of said at least one selected point of interest.

5. The method of any of the preceding claims wherein said step of searching at least one second image portion of said second image, similar to said at least one second image portion of said key image, implements a KLT type algorithm.

6. The method of any one of claims 1 to 3 further comprising a step of determining at least one point of interest in said at least one second image.

7. The method of the preceding claim according to which said step of searching for said at least one first image portion of said second image, similar to said at least one first image portion of said first image implements at least two different similarity-based image portion search algorithms.

8. The method of any of the preceding claims wherein said step of estimating a first relative pose and/or said step of searching at least one second image portion of said second image comprises a pose prediction step using at least one result of estimating the relative pose of said at least one object performed on previous images.

9. A computer program comprising instructions adapted to implement each of the steps of the method according to any of the preceding claims when said program is executed on a computer.

10. A device comprising means adapted to implement each of the steps of the method according to any one of claims 1 to 8.
